# EUROPEAN PATENT SPECIFICATION

(11) **EP 3 225 859 B1**
(45) Date of publication and mention of the grant of the patent: **07.11.2018**
(21) Application number: 17164148.3
(22) Date of filing: 31.03.2017
(51) Int. Cl.: F16B 37/08, F16L 3/137, F16L 3/233, F16L 3/26, F24F 1/34, H02G 3/32, F16L 57/00

(54) **LOCKING DEVICE FOR SUSPENDED DUCT SUPPORTS**
VERRIEGELUNGSVORRICHTUNG FÜR HÄNGENDE LEITUNG
DISPOSITIF DE VERROUILLAGE POUR CONDUIT SUSPENDU

(30) Priority: 01.04.2016 ES 201630391
(43) Date of publication of application: 04.10.2017
(73) Proprietor: Schneider Electric España, S.A., 08019 Barcelona (ES)
(72) Inventor: Shanmughasundararajan, Karthikeyan, Barcelona (ES)
(74) Representative: Herrero & Asociados, S.L.

(56) References cited:
- WO-A1-01/88390
- JP-A- 2003 083 316
- US-A1- 2007 243 046

## Description

### OBJECT OF THE INVENTION

The present invention belongs to the field of devices for joining or locking constructive elements, and more specifically, fastening and locking mechanisms of supports for telecommunications ducts, air conditioning tubes, electrical wiring, etc. that must be suspended at a certain height when installed.

The object of the present invention is a locking device which, in addition to ensuring a secure and stable fastening of supports for suspended ducts with respect to threaded rods, without gaps or unwanted movements of the supports, also provides a quick and convenient installation and uninstallation thereof by the installer.

### BACKGROUND OF THE INVENTION

Different types and configurations of supports for ducts, which must be arranged at a height, that is, suspended with respect to the ground level, and used in all types of installations (telecommunications, climate control, electricity, plumbing, etc.) are currently known in the state of the art.

More specifically, these supports are fastened in a suspended way from ceilings through the use of small accessories, intended to support, hold, house and/or maintain the ducts in a secure and stable position. Thus, in the simplest version, the supports basically consist of metal plates, upon which the duct is directly supported, equipped with at least one through hole, nuts with inner threading and locknuts into which a threaded rod, generally anchored or fastened to the ceiling or an upper beam, is inserted.

Other more complex solutions, in addition to the foregoing, include in the lower end of said threaded rods a second support, clamp or final accessory that is in direct contact with the duct to be supported. By way of example, the patent application EP0905390 A2 can be cited.

Nevertheless, as for the current "fastening mechanisms" of supports for suspended ducts which have threaded rods, several drawbacks continue to exist for which a complete and effective solution has not yet been provided, namely:
- Due to its structural simplicity (nut, locknut and rod) and high weight and length, both of the supports themselves and of the ducts to be supported; the current fastening mechanisms have problems of efficiency, resistance and durability, not only over time, but also during their installation/uninstallation mainly at a height, being subject to gaps, misalignments and unwanted movements of the supports which can result in accidents and falling supports and ducts.
- Their threading mechanisms are completely exposed to the outside, and do not have any means of protection against possible blows or external environmental conditions, which means that variables, such as humidity, suspended dust particles or even continuous temperature changes, may affect its normal operation, leading to the production of oxidation and blockages in the threads, and thus making it difficult to carry out any subsequent maintenance tasks, repairs or part replacements.
- Installation times are clearly optimizable, since it is a task to be carried out at a height, as well as having to manipulate and couple several independent pieces, the process being somewhat complex and requiring certain expertise and experience by the technical installation personnel.
- Furthermore, the current assemblies formed by a fastening mechanism, threaded rod and support have a significant limitation insofar as they do not make it possible to carry out fine adjustment at a height, that is to say, regulation or fastening that is more established, smoother and/or more specific for each case, during installation and uninstallation tasks.

### DESCRIPTION OF THE INVENTION

The previously mentioned drawbacks are solved by the present invention, providing a locking device that, in addition to ensuring a secure fastening of the supports with respect to a threaded rod, understanding the supports as accessories such as beams, brackets, cross-pieces, profiles, guides, plates and similar, intended to fasten and support pipelines, channels, gutters and trays or even the latter without the intervention of the cited accessory, in any of the cases mentioned in order to support and maintain in a stable position the suspended ducts, tubes or cables, hereinafter simply called "ducts", it is an easy-to-use solution for convenient, secure, versatile and quick installation/uninstallation by the installation personnel. Likewise, the locking device herein described provides protection and additional safety to its components against external environmental conditions such as humidity, dust particles, etc.

The locking device for duct supports, object of the invention, comprises a casing that has side walls, an upper wall, and at least one hole into which a threaded rod can be inserted; a pair of pins located inside the casing, preferably at an angle inclined with respect to the vertical axial axis of the casing; a first spring likewise housed inside the casing; and a pair of primary bodies mounted on the first spring, wherein said primary bodies are pushed by the first spring against the upper inner wall of the casing, and are arranged facing each other in an upper inner area of the casing.

These primary bodies, mentioned above, have inner threading, complementary to the threading of the rod, and a through hole, preferably inclined, into which an upper end of the pins is inserted, the primary bodies being movable on the pins, particularly in the direction of the latter.

Thus, when a movement of insertion of the rod into the casing occurs, and since the force exerted for said insertion is greater than the force exerted in the opposite direction by the first spring, the primary bodies tend to move towards the side walls of the casing and inferiorly in the direction of the pins, the first spring in turn being compressed. In this position, the inner threading of the locking bodies does not act with respect to the threads of the rod, allowing the insertion and forward movement thereof, without any locking element.

On the other hand, when the rod stops being inserted, traction of the first spring is produced in the direction opposite to that described above, the spring exerting a vertical pushing force on the primary bodies in the direction opposite to that of the insertion of the rod, and consequently, moving them once again towards the upper central portion of the casing through their respective pins, until their inner threading makes contact with the threading of the rod to definitely lock it. In this way, the threading of both elements (primary bodies and rod) act as stop elements, which upon coming into contact with each other prevent the backward movement of the rod, in other words, preventing the rod from coming out with respect to the casing body, but allowing the rod to act via threading.

Therefore, in a first initial or resting position, the primary bodies are placed by the action of the first spring, in the upper portion of the pins, next to each other and both forming a single body. Thus, when the threaded rod is introduced, said primary bodies separate from each other, moving towards the lower portion of the pins, sliding along it so that later, once the rod is released, that is, once it stops applying pressure or acting upon the same, said primary bodies return to their initial upper position, then locking the rod by means of the inner threading of said primary bodies with respect to the threads of the rod.

Preferably, the locking device of the invention further comprises a first auxiliary locking element joined to the casing corresponding to the inlet hole, being equally equipped with a through hole for inserting a rod; and a second auxiliary locking element that is able to be coupled to the first auxiliary locking element. These auxiliary locking elements make it possible to provide two additional locks, for the support as well as for the rod; therefore, there are three simultaneous locks obtained by means of the device of the invention.

Thus, the primary bodies provide a first lock for the threaded rod, the components thereof being entirely protected and encapsulated within the casing. In this regard, the second auxiliary locking element also makes it possible to equip the first locking element and the secondary bodies with protection and isolation against external environmental conditions, such that the respective threads remain intact and protected from the outside.

On the other hand, it is provided that the locking device described herein can also be included in or coupled to an accessory of those mentioned above (beams, brackets, cross-pieces, etc.). which support pipelines to house ducts, this application being particularly useful in those cases where the rods are anchored to the ceiling, such that by simply unscrewing the second locking element, the device of the invention can be inserted into the rod at the desired height, thus making a fine adjustment, or not, and once again threading said second locking element to definitely lock the entire assembly.

Therefore, by means of the locking device of the invention, the passage of threaded rods in one direction is permitted, locking them in the opposite direction with respect to the support. Furthermore, the locking device described herein has independent mobility with respect to the support, which allows the installer personnel to make a fine and precise adjustment thereof, without risk, and with the capacity to lock and stop the rotation of the supports in the place that requires the installation, as well as locking the entire assembly formed by the support, rod and locking device object of the invention. Therefore, a convenient, quick and effective solution is provided that allows the installer to carry out coupling/decoupling actions and adjustment of the suspended duct supports with respect to the threaded rods, considerably reducing installation times, with greater maneuverability and safety, and thus helping prevent work-related accidents when performing these tasks.

### DESCRIPTION OF THE DRAWINGS

As a complement to the description provided herein and for the purpose of helping to make the characteristics of the invention more readily understandable, in accordance with a preferred practical embodiment thereof, said description is accompanied by a set of drawings constituting an integral part of the same, which by way of illustration and not limitation represent the following:
Figure 1 shows an exploded view of the locking device according to a first preferred embodiment of the invention.
Figures 2A-2H show cross-sectional views of the sequence of coupling and fastening of the locking device of Figure 1 on a surface of a conventional support, such as a pipeline, gutter, tray, profile or similar, as well as locking a threaded rod inserted into the same.
Figure 3 shows another exploded view of the locking device according to a second preferred embodiment.
Figure 4 shows a front view of the locking device of Figure 3, once mounted on a duct support.
Figures 5A-5B show cross-sectional views of the locking element of the second embodiment, wherein locking of the threaded rod from first and second flexible tabs is observed.

### PREFERRED EMBODIMENT OF THE INVENTION

What follows is the description of some preferred exemplary embodiments with reference to the aforementioned figures, which, however, shall not limit or reduce the scope of protection of the present invention.

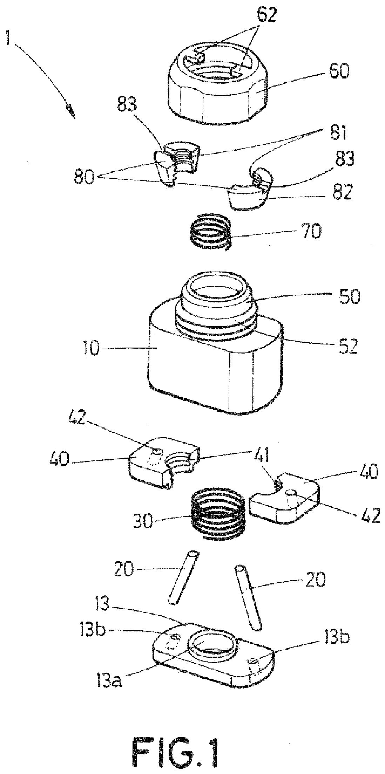

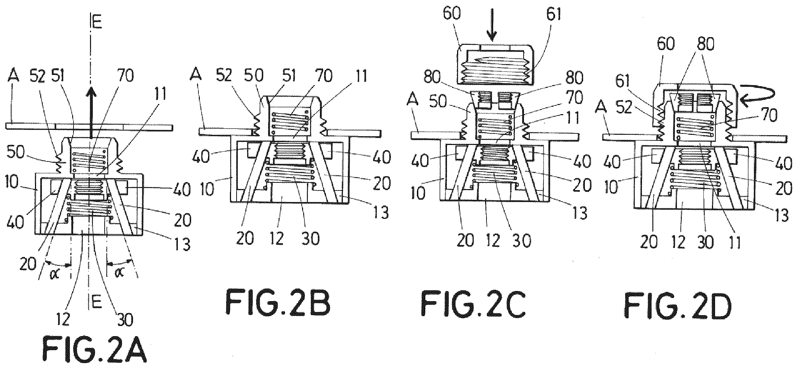

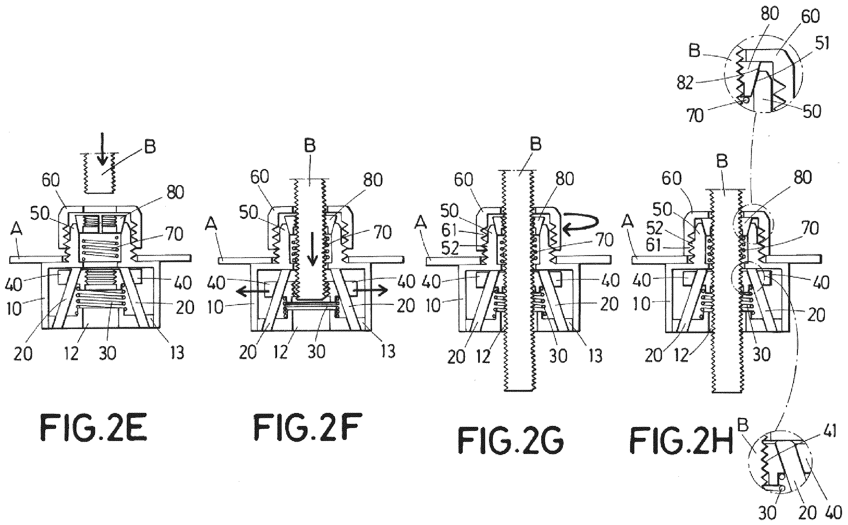

In Figure 1, a first embodiment of the locking device (1) of the invention can be seen, which comprises:
- a casing (10), that in this first example has an upper wall, side walls and a pair of upper and lower coaxial holes (11, 12), into which a threaded rod (B) can be inserted, the latter being shown in Figures 2E-2H;
- a pair of pins (20) located inside the casing (10) at an inclined angle (α), in a symmetrical position with respect to the vertical axial axis (E) of the casing (10), and the upper ends of which converge each other towards said vertical axis (E), as shown in Figure 2A;
- a first spring (30) housed inside the casing (10), in an intermediate position between the two pins (20) and the two upper and lower holes (11, 12) of the casing (10), and inside of which the threaded rod (B) can also be inserted;
- a pair of primary bodies (40), mounted on the first spring (30) which pushes said primary bodies (40) against the upper inner wall of the casing (10), wherein said primary bodies (40) are arranged facing each other in an upper inner area of the casing (10) in order to lock the rod (B); and in turn they have inner threading (41), complementary to the threading of the rod (B), and an inclined through hole (42) into which an upper end of the pins (20) can be inserted, the primary bodies (40) being movable on the pins (20) in the direction of the latter;
- a first auxiliary locking element (50) joined to the casing (10), in this example, both elements (10, 50) constituting a single body, corresponding to the upper hole (11), and into which the rod (B) can also be inserted;
- a second auxiliary locking element (60) that is able to be coupled to the first auxiliary locking element (50) in order to fasten the rod (B);
- a second spring (70) housed inside the first auxiliary locking element (50); and
- a pair of secondary bodies (80), partially inserted in an upper end of the first auxiliary locking element (50), and equipped with inner threading (81), complementary to the threading of the rod (B).

Furthermore, according to this first preferred exemplary embodiment, the locking device comprises a base lid (13), shown in Figure 1, coupled inferiorly to the casing (10), and has a central hole (13a) for the passage of the rod (B) and a pair of side knockout holes (13b) inclined for the insertion of a lower end of the pins (20). This feature makes it possible to further strengthen and secure, if possible, the correct positioning of the pins (20), providing double securing thereof, superiorly by means of through holes (42) of the primary bodies (40), and inferiorly by means of said side knockout holes (13b). More preferably, it is provided that the through holes (42) of the primary bodies (40) are inclined holes, which facilitates the angled arrangement of the pins (20) inside the casing (10), ensuring an optimal coupling and positioning thereof.

At this point, it is worth noting that the particular angled arrangement of the pins (20), as well as the relative position between said pins (20) and first spring (30), allows the rod to be inserted, without any additional element, which causes the primary bodies (40) to separate or move closer, and as a result, the passage or locking of the rod (B).

Thus, Figures 2A-2H show cross-sectional views wherein the installation process of the locking device (1) of Figure 1 in a support (A) is shown, in this case it is shown as a simple horizontal metal plate but referred to as both a surface of a conventional support, such as a beam, bracket, cross-piece, profile, guide or similar suitable for supporting pipelines such as channels, gutters or trays that house ducts, and a surface of any of the mentioned pipelines without the use of said conventional support, provided with a hole; and the subsequent fastening of said support (A) and a threaded rod (B) inserted into the casing (10).

More specifically, in Figures 2A and 2B the locking device (1) is observed moving closer to the support (A) inferiorly according to the arrow shown, in order to insert the first auxiliary locking element (50) into the support (A) or vice versa, wherein, in this case, said first auxiliary locking element (50) and casing (10) make up the same body, thus reducing the number of independent pieces to handle, facilitating their installation and reducing manufacturing costs.

Next, as observed in Figure 2C, the second auxiliary locking device (60) is coupled to the first auxiliary locking device (50). Thus, in this preferred exemplary embodiment, the first auxiliary locking device (50) has outer threading (52), while the second auxiliary locking device (60) has inner threading (61), such that the coupling and closure between both locking elements (50, 60) is obtained by the action and integral joining of their respective threading (52, 61) by simply rotating said second auxiliary locking element (60) according to the arrow shown in Figure 2D.

In this way, as shown in Figures 2E and 2F, when a rod (B) is inserted into the casing (10), the primary bodies (40) move towards the side walls of the casing (10) and inferiorly in the same inclined direction of the pins (20), the first spring (30) in turn being compressed. In this position, shown in Figure 2F, the inner threading (41) of the primary bodies (40) does not act on the threading of the rod (B), allowing the rod (B) to move free of insertion forward to the extent desired.

As for the first spring (30), it is in a stable position by means of partial upper and lower insertion into protrusions provided both in the lower portion of the primary bodies (40) and in the base lid (13) around the central hole (13a) mentioned above, as shown in Figures 1, 2A-2H. Therefore, said first spring (30) is in a fixed position. At this point, it is worth mentioning that when it is said herein that the first spring (30) is compressed or decompressed, it is done so minimally, barely the equivalent to the threading of the primary bodes (40), and therefore enough to allow the passage of the rod (B) without having the inner threads of the primary bodies (40) act; as a result, these primary bodies (40) also separate minimally, without reaching the lower end of the pins (20).

On the other hand, when it stops acting on the rod (B) and the movement of insertion stops, the first spring (30) begins to act and due to its own tensile movement, as shown in Figure 2G, said first spring (30) exerts a vertical pushing force on the primary bodies (40), thus moving them towards their initial position through their respective pins (20) until their inner threading (41) comes in contact with the threading of the rod (B). It is after this step, shown in Figure 2H, that a first locking of the rod (B) is carried out; since when their respective threads come in contact and act as stop elements, a backward movement of said rod (B) is prevented, however, rotation of the rod (B) is enabled with respect to the inner threading (41) of the primary bodies (40), so that the installer can make a fine adjustment according to the best height at which to position the support.

Next, the auxiliary locks of the support (A) and the rod (B) are explained according to this first example of the locking device (1), shown in Figures 2G and 2H, which would make up second and third locks, additional to the first lock already described above.

With these auxiliary locks, it is achieved not only locking the rod (B) from moving backward again, but also prevent its forward movement, also ensuring a fixed and stable position of the support (A) so that both the first and second auxiliary locking elements (50, 60) and the secondary bodies (80) mentioned above interact.

More specifically, in Figure 2G, it is observed that the upper end of the first auxiliary locking element (50) is beveled, equipped with an inclined inner surface (51). In turn, the secondary bodies (80) have a conical, semicircular shape, equipped, in turn, with an inclined outer surface (82) intended to integrally come in contact with the inclined inner surface (51) of the first auxiliary locking element (50). In this way, the coupling and closure of the second auxiliary locking element (60) with respect to the first auxiliary locking element (50) causes the downward pushing and sliding of the secondary bodies (80), so that they move closer to each other until their inner threading (81) comes in contact with the threading of the rod (B), locking and preventing the latter from moving forward. It is worth noting that this pushing movement and sliding of the secondary bodies (80) simultaneously causes the compression of the second spring (70), as observed in Figure 2H. Thus, the unscrewing of the second auxiliary locking element (60) by the installer would cause the tensioning of the second spring (70), and as a result, the upward pushing and sliding of said secondary bodies (80).

In this regard, it is provided that the secondary bodies (80) can have a "U"-shaped transversal inlet (83), shown in Figure 1, arranged on its upper face and which start from its inner threading (81) to its outer side walls. Furthermore, the possibility that the second auxiliary locking element (60) has a pair of upper stops (62), which project horizontally towards the center of said second locking element (60) without coming in contact with each other, leaving enough distance between said upper stops (62) in order to allow a threaded rod (B) to be inserted, is envisaged.

Thus, the coupling of the second auxiliary locking element (60) to the first auxiliary locking element (50) causes contact and pushes said upper stops (62) on the transversal inlets (83) of the secondary bodies (80), thus helping the pushing and sliding of said locking elements (80) on the inclined inner surface (51) of the first auxiliary locking element (50).

Furthermore, with respect to the third lock, in the image of the complete closure of Figure 2H, the fastening of the support (A) is shown, this being firmly held superiorly by the second auxiliary locking element (60), and inferiorly by the upper wall of the casing (10), without the possibility of gaps or unwanted movements of the support (A), such as the rotation of the support (A) with respect to the rod (B), or upwards, that is, towards the second auxiliary locking element (60) when the assembly formed by the locking device (1), support (A) and rod (B) are in their final or mounting position.

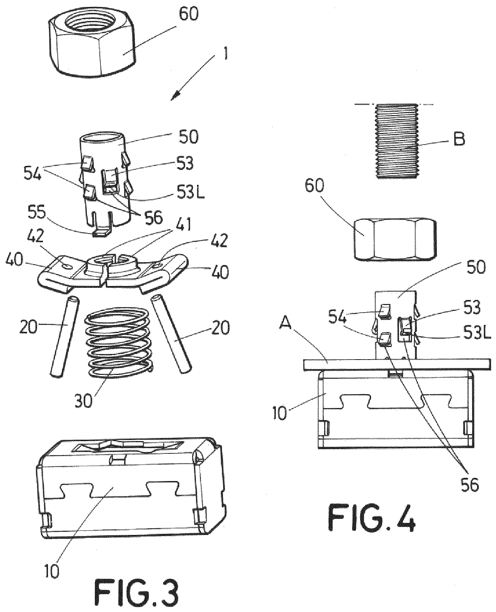

Moreover, in Figures 3, 4, 5A and 5B, a second example of the locking device (1) of the invention can be seen, wherein the first locking of the rod (B) by the primary bodies (40) with the intervention of the pins (20) and the first spring (30) is similar to that described for the first example, and wherein the main distinguishing characteristics with respect to the first example are:
- the first auxiliary locking element (50) which is a cylindrical, elongated, hollow tube, shown in Figure 3, into which a threaded rod (B) can be inserted, its side wall having hollow mortises (56) from the upper end of which first and second flexible tabs (53, 54) project outwards, inferiorly oriented towards the casing (10); and
- the second auxiliary locking element (60) which is a nut equipped with inner threading (1), as shown in Figures 3 and 4, providing simplicity to the locking device (1) of the invention, as well as protection of the flexible tabs (53, 54) mentioned above.

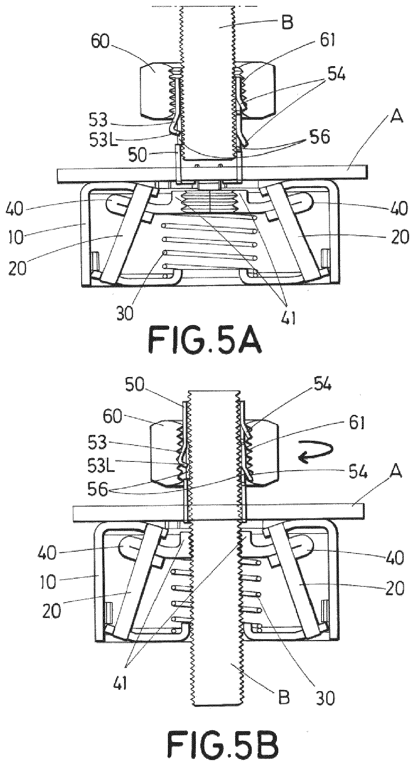

Therefore, this second example foregoes the second spring (70), the secondary locking bodies (80), as well as the lid (13), the casing (10) forming a single closed body, equipped in this case with upper and lower holes, similar to those shown in Figure 2A in order to allow a rod (B) to be inserted. In this second example, the first spring (30) rests on protrusions provided only in the lower base of the casing (10), as shown in figures 5A and 5B.

More specifically, in Figure 5A, it can be seen that the first flexible tabs (53) have an "L"-shaped distal end (53L) that converges towards the side wall of the cylindrical tube (50). In this way, the coupling and closure of the nut (60) on the cylindrical tube (50) causes pushing inside said flexible first tabs (53), making its "L"-shaped distal end (53L) come in contact with the threading of the rod (B) locking the forward movement thereof, as shown in Figure 5B, this being made of a second lock provided by the device of the invention.

In turn, the second flexible tabs (54), shown in Figures 5A and 5B, have the shape of an inclined ramp, with its distal end divergent and protruding toward the outside of the cylindrical tube (50). Thus, the coupling and closure of the nut (60) on the cylindrical tube (50) causes said second flexible tabs (54) to come in contact with the inner threading (61) of the nut (60), preventing the backward movement, or unscrewing of said nut (60), acting as a threading guide.

Furthermore, in Figure 3, it is observed that the cylindrical tube (50) has at least one tab (55) that projects horizontally outwards from the lower edge of said cylindrical tube (50). This tab (55) makes it possible to securely anchor and strengthen the cylindrical tube (50) to the body of the casing (10), preventing the unwanted escape or exit of said cylindrical tube (50).

Therefore, the third lock is produced when the support (A) is finally held firmly superiorly by the second auxiliary locking element (60), and inferiorly by the upper wall of the casing (10), without the possibility of gaps or unwanted movements of the support (A), such as the rotation of the support (A) with respect to the rod (B), or towards the second auxiliary locking element (60) when the assembly formed by the locking device (1), support (A) and rod (B) are in their final or mounting position.

## Claims

1. A locking device (1) for suspended duct supports (A), comprising a casing (10) that has side walls, an upper wall, and at least one hole (11) into which a threaded rod (B) can be inserted; a pair of pins (20) and a first spring (30) located inside the casing (10) **characterized in that** it further comprises a pair of primary bodies (40) mounted on the first spring (30), wherein said primary bodies (40) are pushed by the first spring (30) against an inner side of the upper wall of the casing (10), and are arranged facing each other in an upper inner area of the casing (10),
and wherein the primary bodies (40) have inner threading (41), complementary to the threading of the rod (B), and a through hole (42) into which an upper end of the pins (20) is inserted, said primary bodies (40) being movable on the pins (20),
so that when an insertion movement of a rod (B) is produced in the casing (10), the primary bodies (40) move towards the side walls of the casing (10) and inferiorly in the direction of the pins (20), the first spring (30) in turn being compressed,
and such that when the rod (B) stops being inserted, the first spring (30) pulls, exerting a vertical pushing force on the primary bodies (40) in the direction opposite to that of the insertion of the rod (B), and consequently, moving them towards the upper central portion of the casing (10) through their respective pins (20), until their inner threading (41) makes contact with the threading of the rod (B) to lock it.

2. The locking device (1) according to claim 1, **characterized in that** the pins (20) are located at an inclined angle (α), in a symmetrical position with respect to the vertical axial axis (E) of the casing (10), and the upper ends of which converge each other towards said vertical axis (E), while the first spring (30) is located in an intermediate position between the two pins (20).

3. The locking device (1) according to claim 2, **characterized in that** the through holes (42) of the primary bodies (40) are inclined holes.

4. The locking device (1) according to any one of claims 1 to 3, **characterized in that** it further comprises:
- a first auxiliary locking element (50) joined to the casing (10) corresponding to the inlet hole (11), and
- a second auxiliary locking element (60) that is able to be coupled to the first auxiliary locking element (50).

5. The locking device (1) according to claim 4, **characterized in that** it further comprises:
- a second spring (70) housed inside the first auxiliary locking element (50), and
- a pair of secondary bodies (80), located in upper position with respect to the second spring (70) and partially inserted on an upper end of the first locking element (50), and wherein said secondary bodies (80) have inner threading (81), complementary to the threading of the rod (B).

6. The locking device (1) according to claim 5, **characterized in that** the upper end of the first auxiliary locking element (50) has a beveled, equipped with an inclined inner surface (51); and **in that** the secondary bodies (80) have a conical, semicircular shape, equipped, in turn, with an inclined outer surface (82) in solid contact with the inclined inner surface (51) of the first locking element (50).

7. The locking device (1) according to claim 5, **characterized in that** the secondary bodies (80) have a "U"-shaped transversal inlet (83) arranged on its upper face and which start from its inner threading (81) to its outer side walls;
and that the second auxiliary locking element (60) has a pair of upper stops (62), which project horizontally towards the center of said second locking element (60) without coming in contact with each other, leaving enough distance between said upper stops (62) in order to insert a threaded rod (B).

8. The locking device (1) according to claim 4, **characterized in that** the first auxiliary locking element (50) has an outer threading (52), while the second auxiliary locking element (60) has an inner threading (61), such that the coupling and closure between both locking elements (50, 60) is obtained by the action of their respective threading (52, 61).

9. The locking device (1) according to any one of the preceding claims 4 or 8, **characterized in that** the casing (10) and the first auxiliary locking element (50) make up the same body.

10. The locking device (1) according to any one of the preceding claims 1 to 9, **characterized in that** it further comprises a base lid (13) that can be coupled inferiorly to the casing (10).

11. The locking device (1) according to claim 10, **characterized in that** the base lid (13) has a central hole (13a) for the passage of the rod (B) and a pair of side knockout holes (13b) for the insertion of a lower end of the pins (20).

12. The locking device (1) according to claim 4, **characterized in that** the first auxiliary locking element (50) is a cylindrical, elongated, hollow tube, into which a threaded rod (B) can be inserted.

13. The locking device (1) according to claim 12, **characterized in that** the cylindrical tube (50) has on its side wall hollow mortises (56) from the upper end of which first and second flexible tabs (53, 54) project outwards, oriented inferiorly towards the casing (10).

14. The locking device (1) according to claim 13, **characterized in that** the first flexible tabs (53) have an "L"-shaped distal end (53L) that converges towards the side wall of the cylindrical tube (50).

15. The locking device (1) according to claim 13, **characterized in that** the second flexible tabs (54) have the shape of an inclined ramp, with its distal end divergent and protruding toward the outside of the cylindrical tube (50).

16. The locking device (1) according to any one of the claims 12-15, **characterized in that** the cylindrical tube (50) has at least one tab (55) that projects horizontally outwards from the lower edge of said cylindrical tube (50).

17. The locking device (1) according to claim 4, **characterized in that** the second auxiliary locking element (60) is a nut equipped with inner threading (61).

## Patentansprüche

1. Verriegelungsvorrichtung (1) für Halterungen (A) hängender Leitungen, aufweisend ein Gehäuse (10), das Seitenwände, eine obere Wand und mindestens ein Loch (11) hat, in das eine Gewindestange (B) eingeführt werden kann; ein Paar Stifte (20) und eine im Innern des Gehäuses (10) angeordnete erste Feder (30),
**dadurch gekennzeichnet, dass** sie ferner ein Paar primäre Körper (40) aufweist, die auf der Feder (30) montiert sind, wobei die primären Körper (40) von der ersten Feder (30) gegen eine Innenseite der oberen Wand des Gehäuses (10) gedrückt werden und einander zugewandt in einem oberen Innenbereich des Gehäuses (10) angeordnet sind,
und wobei die primären Körper (40) ein zu dem Gewinde der Stange (B) komplementäres Innengewinde (41) und ein Durchgangsloch (42) haben, in das ein oberes Ende der Stifte (20) eingesetzt ist, wobei die primären Körper (40) auf den Stiften (20) bewegbar sind,
so dass, wenn eine Einführbewegung einer Stange (B) in das Gehäuse erfolgt, die primären Körper (40) sich hin zu den Seitenwänden des Gehäuses (10) und abwärts in der Richtung der Stifte (20) bewegen, wodurch die erste Feder (30) zusammengedrückt wird,
und so dass, wenn das Einführen der Stange (B) gestoppt wird, die erste Feder (30) zieht und eine vertikale Stoßkraft auf die primären Körper (40) in eine zur Einführrichtung der Stange (B) entgegengesetzte Richtung ausübt und sie folglich durch ihre jeweiligen Stifte (20) hin zu dem oberen zentralen Teil des Gehäuses (10) bewegt, bis ihr Innengewinde (41) mit dem Gewinde der Stange (B) einen Kontakt herstellt, um sie zu verriegeln.

2. Verriegelungsvorrichtung (1) nach Anspruch 1, **dadurch gekennzeichnet, dass** die Stifte (20) in einem schrägen Winkel (α) und in einer bezüglich der vertikalen Achse (E) des Gehäuses symmetrischen Position angeordnet sind und ihre oberen Enden sich zu der vertikalen Achse (E) hin nähern, während die erste Feder (30) in einer Zwischenposition zwischen den zwei Stiften (20) angeordnet ist.

3. Verriegelungsvorrichtung (1) nach Anspruch 2, **dadurch gekennzeichnet, dass** die Durchgangslöcher (42) der primären Körper (40) schräge Löcher sind.

4. Verriegelungsvorrichtung (1) nach einem der Ansprüche 1 bis 3, **dadurch gekennzeichnet, dass** sie ferner aufweist:
- ein erstes Hilfsverriegelungselement (50), das mit dem Gehäuse (10) verbunden ist entsprechend dem Einführloch (11) und
- ein zweites Hilfsverriegelungselement (60), das konfiguriert ist, um mit dem ersten Hilfsverriegelungselement (50) gekoppelt zu werden.

5. Verriegelungsvorrichtung (1) nach Anspruch 4, **dadurch gekennzeichnet, dass** sie ferner aufweist:
- eine zweite Feder (70), die im Inneren des ersten Hilfsverriegelungselements (50) untergebracht ist, und
- ein Paar sekundäre Körper (80), die in einer bezüglich der zweiten Feder (70) oberen Position angeordnet sind und teilweise an einem oberen Ende des ersten Hilfsverriegelungselements (50) eingesetzt sind, und wobei die sekundären Körper (80) ein zu dem Gewinde der Stange (B) komplementäres Innengewinde (81) haben.

6. Verriegelungsvorrichtung (1) nach Anspruch 5, **dadurch gekennzeichnet, dass** das obere Ende des ersten Hilfsverriegelungselements (50) abgeschrägt ist, versehen mit einer geneigten Innenfläche (51); und dadurch, dass die sekundären Körper (80) eine konische Halbkreisform haben, die ihrerseits mit einer geneigten Außenfläche (82) versehen ist, die in festem Kontakt mit der geneigten Innenfläche (51) des ersten Hilfsverriegelungselements (50) ist.

7. Verriegelungsvorrichtung (1) nach Anspruch 5, **dadurch gekennzeichnet, dass** die sekundären Körper (80) einen an ihrer oberen Fläche angeordneten U-förmigen transversalen Einlass (83) haben, der sich ausgehend von ihrem Innengewinde (81) zu ihren äußeren Seitenwänden erstreckt;
und dadurch, dass das zweite Hilfsverriegelungselement (60) ein Paar obere Anschläge (62) hat, die horizontal zur Mitte des zweiten Hilfsverriegelungselements (60) hin ragen, ohne miteinander in Kontakt zu kommen, und wobei zwischen den oberen Anschlägen (62) ein ausreichender Zwischenraum bleibt, um eine Gewindestange (B) einzuführen.

8. Verriegelungsvorrichtung (1) nach Anspruch 4, **dadurch gekennzeichnet, dass** das erste Hilfsverriegelungselement (50) ein Außengewinde (52) hat, während das zweite Hilfsverriegelungselement (60) ein Innengewinde (61) hat, so dass die Koppelung und der Verschluss zwischen den beiden Verriegelungselementen (50, 60) durch Wirkung ihrer jeweiligen Gewinde (52, 61) erzielt wird.

9. Verriegelungsvorrichtung (1) nach einem der vorstehenden Ansprüche 4 oder 8, **dadurch gekennzeichnet, dass** das Gehäuse (10) und das erste Hilfsverriegelungselement (50) aus einem einzigen Körper bestehen.

10. Verriegelungsvorrichtung (1) nach einem der vorstehenden Ansprüche 1 bis 9, **dadurch gekennzeichnet, dass** sie ferner einen Basisdeckel (13) aufweist, der unten an dem Gehäuse (10) angebracht werden kann.

11. Verriegelungsvorrichtung (1) nach Anspruch 10, **dadurch gekennzeichnet, dass** der Basisdeckel (13) ein zentrales Loch (13a) zum Durchführen der Stange (B) und ein Paar seitliche Ausbrechlöcher (13b) zum Einsetzen eines unteren Endes der Stifte (20) hat.

12. Verriegelungsvorrichtung (1) nach Anspruch 4, **dadurch gekennzeichnet, dass** das erste Hilfsverriegelungselement (50) ein zylindrisches längliches hohles Rohr ist, in das eine Gewindestange (B) eingeführt werden kann.

13. Verriegelungsvorrichtung (1) nach Anspruch 12, **dadurch gekennzeichnet, dass** das zylindrische Rohr (50) an seiner Seitenwand hohle Nuten (56) hat, von deren oberen Enden aus erste und zweite elastische Zungen (53, 54) nach außen ragen und nach unten zum Gehäuse hin gerichtet sind.

14. Verriegelungsvorrichtung (1) nach Anspruch 13, **dadurch gekennzeichnet, dass** die ersten elastischen Zungen (53) ein L-förmiges distales Ende (53L) haben, das sich an die Seitenwand des zylindrischen Rohrs (50) annähert.

15. Verriegelungsvorrichtung (1) nach Anspruch 13, **dadurch gekennzeichnet, dass** die zweiten elastischen Zungen (54) die Form einer schrägen Rampe haben, deren distales Ende divergiert und von dem zylindrischen Rohr (50) nach außen ragt.

16. Verriegelungsvorrichtung (1) nach einem der Ansprüche 12 bis 15, **dadurch gekennzeichnet, dass** das zylindrische Rohr (50) mindestens eine Zunge (55) hat, die von der Unterkante des zylindrischen Rohrs (50) horizontal auswärts vorsteht.

17. Verriegelungsvorrichtung (1) nach Anspruch 4, **dadurch gekennzeichnet, dass** das zweite Hilfsverriegelungselement (60) eine mit einem Innengewinde (61) versehene Schraubenmutter ist.

## Revendications

1. Dispositif de verrouillage (1) pour supports de conduits suspendus (A), comprenant un boîtier (10) qui présente des parois latérales, une paroi supérieure et au moins un trou (11) dans lequel une tige filetée (B) peut être introduite ; une paire d'axes (20) et un premier ressort (30) situés à l'intérieur du boîtier (10), **caractérisé en ce qu'**il comprend en outre une paire de corps primaires (40) montés sur le premier ressort (30), lesdits corps primaires (40) étant poussés par le premier ressort (30) contre un côté interne de la paroi supérieure du boîtier (10), et sont disposés face à face dans une zone intérieure supérieure du boîtier (10),
et dans lequel les corps primaires (40) ont un filetage intérieur (41), complémentaire du filetage de la tige (B), et un trou traversant (42) dans lequel une extrémité supérieure des broches (20) est insérée, lesdits corps primaires (40) étant mobiles sur les broches (20),
de sorte que lorsqu'un mouvement d'insertion d'une tige (B) est produit dans le boîtier (10), les corps primaires (40) se déplacent vers les parois latérales du boîtier (10) et en dessous dans la direction des axes (20), le premier ressort (30) étant à son tour comprimé,
et de sorte que lorsque la tige (B) étant insérée s'arrête, le premier ressort (30) tire, exerçant une force de poussée verticale sur les corps primaires (40) dans la direction opposée à celle de l'insertion de la tige (B), et par conséquent, les déplaçant vers la partie centrale supérieure du boîtier (10) à travers leurs axes respectifs (20), jusqu'à ce que leur filetage intérieur (41) soit en contact avec le filetage de la tige (B) pour le bloquer.

2. Dispositif de verrouillage (1) selon la revendication 1, **caractérisé en ce que** les axes (20) sont disposés selon un angle incliné (α), dans une position symétrique par rapport à l'axe vertical axial (E) du boîtier (10), et dont les extrémités supérieures convergent l'une vers l'autre vers ledit axe vertical (E), le premier ressort (30) étant disposé dans une position intermédiaire entre les deux axes (20).

3. Dispositif de verrouillage (1) selon la revendication 2, **caractérisé en ce que** les trous traversants (42) des corps primaires (40) sont des trous inclinés.

4. Dispositif de verrouillage (1) selon l'une quelconque des revendications 1 à 3, **caractérisé en ce qu'**il comprend en outre :
- un premier élément de verrouillage auxiliaire (50) relié au boîtier (10) correspondant au trou d'entrée (11), et
- un second élément de verrouillage auxiliaire (60) qui peut être couplé au premier élément de verrouillage auxiliaire (50).

5. Dispositif de verrouillage (1) selon la revendication 4, **caractérisé en ce qu'**il comprend en outre :
- un second ressort (70) logé à l'intérieur du premier élément de verrouillage auxiliaire (50), et
- une paire de corps secondaires (80), situés en position supérieure par rapport au second ressort (70) et partiellement insérés sur une extrémité supérieure du premier élément de verrouillage (50), et où lesdits corps secondaires (80) ont un filetage intérieur (81), complémentaire au filetage de la tige (B).

6. Dispositif de verrouillage (1) selon la revendication 5, **caractérisé en ce que** l'extrémité supérieure du premier élément de verrouillage auxiliaire (50) a un biseau, aménagé avec une surface intérieure inclinée (51), et **en ce que** les corps secondaires (80) a une forme conique, semi-circulaire, aménagée, a son tour, avec une surface extérieure (82) inclinée en contact solide avec la surface intérieure (51) inclinée du premier élément de verrouillage (50).

7. Dispositif de verrouillage (1) selon la revendication 5, **caractérisé en ce que** les corps secondaires (80) ont une entrée transversale (83) en forme de "U" disposée sur sa face supérieure et qui part de son filetage intérieur (81) vers ses parois latérales extérieures ;
et **en ce que** le deuxième élément de verrouillage auxiliaire (60) comporte une paire de butées supérieures (62) qui font saillie horizontalement vers le centre dudit deuxième élément de verrouillage (60) sans entrer en contact l'une avec l'autre, laissant une distance suffisante entre lesdites butées supérieures (62) pour insérer une tige filetée (B).

8. Dispositif de verrouillage (1) selon la revendication 4, **caractérisé en ce que** le premier élément de verrouillage auxiliaire (50) présente un filetage extérieur (52), tandis que le deuxième élément de verrouillage auxiliaire (60) présente un filetage intérieur (61), de sorte que le couplage et la fermeture entre les deux éléments de verrouillage (50, 60) est obtenu par l'action de leur filetage respectif (52,61).

9. Dispositif de verrouillage (1) selon l'une quelconque des revendications précédentes 4 ou 8, **caractérisé en ce que** le boîtier (10) et le premier élément de verrouillage auxiliaire (50) forment le même corps.

10. Dispositif de verrouillage (1) selon l'une quelconque des revendications précédentes 1 à 9, **caractérisé en ce qu'**il comprend en outre un couvercle de base (13) qui peut être couplé de manière inférieure au boîtier (10).

11. Dispositif de verrouillage (1) selon la revendication 10, **caractérisé en ce que** le couvercle de base (13) a un trou central (13a) pour le passage de la tige (B) et une paire de trous d'extraction latéraux (13b) pour l'insertion d'une extrémité inférieure des axes (20).

12. Dispositif de verrouillage (1) selon la revendication 4, **caractérisé en ce que** le premier élément de verrouillage auxiliaire (50) est un tube creux cylindrique allongé dans lequel une tige filetée (B) peut être introduite.

13. Dispositif de verrouillage (1) selon la revendication 12, **caractérisé en ce que** le tube cylindrique (50) présente sur sa paroi latérale des mortaises creuses (56) à partir de l'extrémité supérieure desquelles des première et seconde pattes flexibles (53, 54) font saillie vers l'extérieur, orientées vers le bas en direction du boîtier (10).

14. Dispositif de verrouillage (1) selon la revendication 13, **caractérisé en ce que** les premières languettes flexibles (53) présentent une extrémité distale (53L) en forme de "L" qui converge vers la paroi latérale du tube cylindrique (50).

15. Dispositif de verrouillage (1) selon la revendication 13, **caractérisé en ce que** les deuxièmes pattes flexibles (54) ont la forme d'une rampe inclinée, avec son extrémité distale divergente et faisant saillie vers l'extérieur du tube cylindrique (50).

16. Dispositif de verrouillage (1) selon l'une quelconque des revendications 12-15, **caractérisé en ce que** le tube cylindrique (50) comporte au moins une patte (55) qui fait saillie horizontalement vers l'extérieur à partir du bord inférieur dudit tube cylindrique (50).

17. Dispositif de verrouillage (1) selon la revendication 4, **caractérisé en ce que** le deuxième élément de verrouillage auxiliaire (60) est un écrou muni d'un filetage intérieur (61).
